# EUROPÄISCHE PATENTSCHRIFT

(11) **EP 2 264 245 B1**
(45) Veröffentlichungstag und Bekanntmachung des Hinweises auf die Patenterteilung: **12.07.2017**
(21) Anmeldenummer: 10005637.3
(22) Anmeldetag: 31.05.2010
(51) Int. Cl.: E01C 19/48, B62D 55/14, B62D 55/24, E01C 13/06

(54) **Einbaufertiger**
Finisher
Finisseuse

(30) Priorität: 02.06.2009 DE 202009007705 U
(43) Veröffentlichungstag der Anmeldung: 22.12.2010
(73) Patentinhaber: SMG Sportplatzmaschinenbau GmbH, 89269 Vöhringen (DE)
(72) Erfinder: Owegeser, Johann, 89189 Illerrieden (DE)
(74) Vertreter: Pfister, Stefan Helmut Ulrich

(56) Entgegenhaltungen:
- EP-A1- 0 378 738
- EP-A1- 1 865 108
- EP-A2- 1 362 773
- DE-A1- 3 920 201
- FR-A1- 2 593 200
- US-A- 4 507 015

## Beschreibung

Die Erfindung betrifft einen Einbaufertiger, insbesondere für die Verwendung bei der Installation von Kunststoff-Sportbelägen oder teilelastischen Tragschichten.

Um den professionellen Einbau von Athletikbahnen sowie von elastischen aus Kunststoff bestehende Tragschichten durchzuführen, werden Einbaufertiger verwendet. Diese Einbaufertiger weisen einen Antrieb auf und daneben eine sogenannte Glättbohle, die für eine gleichmäßige Verteilung des elastischen Bahnmaterials beziehungsweise der elastischen Tragschichten verantwortlich ist. Zur Verteilung des Bahnmaterials ist die Glättbohle vibrationsbeaufschlagt ausgeführt. Der Antrieb der Vorrichtung, erfolgt in der Regel über ein Ketten- oder Bandlaufwerk. Die bekannten Einbaufertiger weisen hierzu ein Laufwerk auf, das zumindest ein Antriebsrad sowie wenigstens ein Laufrad umfasst. Sowohl das Antriebsrad als auch das Laufrad sind in der Regel als Zahnrad ausgebildet und treiben damit die Laufkette oder das -band des Laufwerkes an.
Aus dem Stand der Technik ist ein Gleiskettenfahrzeug bekannt. Dieses weist an beiden Seiten endlose Gleisketten auf, die über eigenständige Räder und über eine Vielzahl von dazwischen an seinem Rahmen angeordneten Laufrollen geführt sind.
Des Weiteren ist aus dem Stand der Technik ein hydromechanisches Antriebsaggregat bekannt, welches lediglich dem Antrieb beispielsweise auch für ein Kettenfahrzeug dient. Allerdings wird in dieser Lösung lediglich ein Detail eines Antriebsaggregates gezeigt und nicht die spezielle Ausgestaltung eines Fahrwerkes.
Aus dem Stand der Technik ist weiterhin eine Lösung bekannt, die einen Antrieb für in einer Ebene umlaufende Räder umfasst. Die Räder werden dabei über gekoppelte Kettenräder angetrieben.
Weiterhin ist eine Lösung bekannt, in der ein Laufwerk vorgestellt wird, welches ein Kettenfahrzeug antreibt. Diese Lösung beschäftigt sich insbesondere mit der speziellen Ausgestaltung der Kette.
Weiterhin ist eine Antriebsvorrichtung bekannt, welche über einen Kettenantrieb beziehungsweise über einen Zahnriemen angetrieben wird. Dabei berühren die Laufrollen den Boden, während die Kette beziehungsweise der Zahnriemen über Zahnräder an beiden Laufrädern geführt ist.

Aus EP 0 378 738 A ist ein Einbaufertiger mit einem Kettenlaufwerk und Laufrollen bekannt. Die Laufrollen führen dabei die Kettenglieder des Laufwerks.

Bekannte Einbaufertiger weisen mehrere Nachteile auf. Zum Einen treten, bedingt durch die Verwendung von Ritzeln als Laufbeziehungsweise Antriebsrad, erhebliche Vibrationen auf, die sich nachteilig auf die Einbauleistung der Glättbohle auswirken. Zum Anderen werden in der Regel stark haftende beziehungsweise klebende Materialien verwendet, die sich in den Zähnen der Ritzel beziehungsweise zwischen den Zähnen der Ritzel absetzten und damit den Umfang des Ritzels vergrößern. Diese Verlängerung führt zu einer Spannung des Laufbandes beziehungsweise der -kette, was wiederum eine höhere Beanspruchung der Antriebseinheit mit sich bringt. Zudem wirken sich hierdurch Vibrationen verstärkt auf den Antrieb aus. Das Verkleben der Ritzel erhöht außerdem die Gefahr eines Abspringens der Laufkette beziehungsweise des -bandes vom Lauf- oder Antriebsrad, wodurch die Bedienersicherheit der Vorrichtung gesenkt wird. Aufgabe der vorliegenden Erfindung ist es daher, einen Einbaufertiger zur Verfügung zu stellen, der bei verbesserter Laufruhe einen niedrigeren Verschleiß des Laufwerks, eine erhöhte Bedienersicherheit und eine verbesserte Kraftübertragung zwischen Vortriebseinrichtung und Laufrad aufweist. Diese Aufgabe wird gemäß Anspruch 1 gelöst durch einen Einbaufertiger, der eingangs genannten Art, der insbesondere für die Verwendung bei der Installation von Kunststoff-Sportbelägen und/oder teilelastischen Tragschichten zum Einsatz kommt. Dieser Einbaufertiger umfasst eine umlaufend ausgebildete Vortriebseinrichtung und wenigstens ein mit der Vortriebseinrichtung in Eingriff stehendes Antriebsrad und wenigstens ein Laufrad. Erfindungsgemäß ist vorgesehen, dass das Laufrad kraftschlüssig mit der Vortriebseinrichtung in Eingriff steht. Dieser kraftschlüssige Eingriff des Laufrades wird dadurch erreicht, dass dieses keine Vorsprünge oder Ritzelzähne aufweist, sondern als im Wesentlichen walzenförmige Rolle ausgebildet ist. Nach der Erfindung weist das Laufrad einen Laufradkörper auf, an dessen Umfangspur kranzartige Wülste angeordnet sind.Diese Wülste sind entlang des Umfangs des Laufradkörpers, vorzugsweise beidseitig, an dem Laufradkörper vorgesehen. Dabei weist der Laufradkörper, wie bereits erwähnt, eine Lauffläche auf, in der eine umlaufende Nut eingeschnitten ist. Das Laufrad steht dabei mit einem Band des Laufwerks des Einbaufertiges kraftschlüssig in Eingriff. Das Band liegt dabei auf der Lauffläche auf.

Um auch ohne die Anordnung von Zähnen, die in die Vortriebseinrichtung eingreifen, einen möglichst dauerhaften Kraftschluss zwischen der Vortriebseinrichtung und dem Laufrad zu erreichen, sieht die Erfindung bevorzugt vor, dass das Laufrad eine Lauffläche aufweist, die mit der Vortriebseinrichtung in Eingriff steht und die Lauffläche eine reibungserhöhende Beschichtung aufweist. Daneben ist es auch möglich, dass die Lauffläche einer Oberflächenbehandlung unterzogen wurde, die den Kraftschluss verbessert. Hierbei ist es beispielsweise möglich, eine entsprechende Aufrauung der Oberfläche durch Anschleifen durchzuführen. Neben der entsprechenden Behandlung der Lauffläche besteht auch die Möglichkeit, das gesamte Laufrad entsprechend zu beschichten, beziehungsweise die Oberfläche zu behandeln. Nach der Erfindung weist das Laufrad einen Laufradkörper auf, an dessen Umfangspur kranzartige Wülste angeordnet sind. Diese Wülste sind entlang des Umfangs des Laufradkörpers, vorzugsweise beidseitig, an dem Laufradkörper vorgesehen. Dabei weist der Laufradkörper, wie bereits erwähnt, eine Lauffläche auf, in der in einer weiteren bevorzugten Ausgestaltung eine umlaufende Nut eingeschnitten ist. Das Laufrad steht dabei mit einem Band des Laufwerks des Einbaufertiges kraftschlüssig in Eingriff. Das Band liegt dabei auf der Lauffläche auf.

Gegenüber dem Stand der Technik unterscheidet sich diese Lösung durch mehrere Merkmale und Vorteile. So ist aus der zuerst genannten Druckschrift des Standes der Technik betreffend ein Gleiskettenfahrzeug ein Kraftschluss an den Laufrädern vorhanden, der lediglich durch das Fahrwerk beziehungsweise eine gewisse Biegsamkeit und federnde Elastizität des Fahrzeugrahmens und die schwenkbare Anordnung der Laufräder an entsprechenden Schwingen vorhanden. Ein kraftschlüssiger An- beziehungsweise Vortrieb wird durch diese Ausgestaltung nicht erreicht. Durch die Ausgestaltung mit einer Lauffläche, die seitlich spurkranzartige Wülste aufweist, wird die kraftschlüssige Wirkung des Antriebs weiter erhöht.

In der zweiten eingangs genannten Druckschrift des Standes der Technik ist lediglich ein Detail eines Antriebsaggregates gezeigt, was keineswegs die Lösung eines Laufrades mit einem Laufradkörper und spurkranzartigen Wülsten gezeigt, wobei der Kraftschluss über den Laufradkörper beziehungsweise dessen sich zwischen den spurkranzartigen Wülsten erstreckenden Laufradfläche hergestellt wird.

In der dritten im Stand der Technik gezeigten Lösung ist lediglich ein Antrieb für in einer Ebene umlaufende Räder gezeigt. Diese Lösung zeigt keinen Kraftschluss, vielmehr ist durch die Kupplung der Räder über gekoppelte Kettenräder ein Formschluss vorhanden, auch wenn die Kette über ein Antriebsritzel sowie ein verstellbares Spannritzel geführt ist.

Die nächste Schrift des Standes der Technik beschäftigt sich im wesentlichen lediglich mit der Ausgestaltung der Kette eines Kettenfahrzeuges. Dabei wird die Kette durch ein Antriebsrad angetrieben, welches über die Kette formschlüssig angetrieben wird.

Auch die zuletzt im Stand der Technik kurz erwähnte Lösung zeichnet sich dadurch aus, dass entweder ein Zahnriemen beziehungsweise eine Kette die Laufräder antreibt. Hierbei ist ganz eindeutig von einer formschlüssigen Verbindung auszugehen, die den Antrieb der Laufrollen bewirkt. Die Kettenräder sind auf der Achse der Laufrollen angeordnet und treiben diese über den Zahnriemen beziehungsweise die Kette an.

Eine bevorzugte Ausführungsform des erfindungsgemäßen Einbaufertigers sieht vor, dass nicht nur das Laufrad eine entsprechend behandelte Lauffläche oder eine Oberflächenbehandlung aufweist, sondern auch das Antriebsrad oder Triebrad entsprechend behandelt wurde. Dies verbessert weiter den Eingriff des Antriebsrades mit der Vortriebseinrichtung und erhöht den Gleichlauf der Vorrichtung.

Das Antriebs- und das Laufrad sind durch die Vortriebseinrichtung verbunden und drehen sich bevorzugt mit gleicher Umfangsgeschwindigkeit. Erfolgt nun eine Blockade des Laufrades, so wird, bei dem herkömmlicherweise mit zwei als Ritzel ausgebildeten Rädern versehenen Einbaufertigern, die schlagartig auftretende erhöhte Krafteinleitung in die Vortriebseinrichtung unmittelbar an die Lagerung des Laufrades beziehungsweise den Antrieb weiter gegeben. Eine Ausgestaltung des Laufrades mit einer nur kraftschlüssigen Verbindung zur Vortriebseinrichtung bewirkt hier, dass bei Blockade oder Verringerung der Laufgeschwindigkeit eines der beiden Räder, die Vortriebseinrichtung einen Schlupf, und somit eine kurzzeitige Überlastungsfähigkeit aufweist. Eine zu starke Beaufschlagung des Antriebs kann so vermieden werden. Dies führt dazu, dass die Haltbarkeit beziehungsweise Standzeit des Einbaufertigers wesentlich erhöht wird. Zudem wird hierdurch auch der Gleichlauf beziehungsweise die Laufruhe des Einbaufertigers verbessert. Das Laufrad ist bevorzugt als walzen- oder rollenförmiges Rad ausgeführt und weist zur Führung der Vortriebseinrichtung bevorzugt einen an seinem Umfang angeordneten Spurkranz auf. Dieser wulstartige Spurkranz begrenzt die Lauffläche an den Seiten des Laufrades und dient der Führung der Vortriebseinrichtung.

Um eine Kraftübertragung vom Antrieb auf die Vortriebseinrichtung zu erreichen, ist in einer vorteilhaften Weiterbildung des erfindungsgemäßen Einbaufertigers vorgesehen, dass die Vortriebseinrichtung an ihrer dem Antriebsrad zugewandten Oberfläche wenigstens eine Führung zum Eingriff mit dem Antriebsrad aufweist. Die Vortriebseinrichtung kann hierzu beispielsweise nach Art eines Keilriemens, eines Keilrippenriemens oder eines Zahnriemens ausgebildet sein oder die Führungselemente der genannten Antriebsriemen mit einer Kette, Gliederkette oder einem Flachriemen kombiniert aufweisen.

Gleichzeitig weist das Antriebsrad passend an die Führung ausgebildete Ausnehmungen auf, sodass hier ein Formschluss stattfinden kann. So ist beispielsweise vorgesehen, dass die Vortriebseinrichtung auf das Antriebsrad hin ausgerichtete Vorsprünge oder Nasen aufweist, die in entsprechende Ausnehmungen des Antriebsrades eingreifen können. Hierzu ist das Antriebsrad bevorzugt nach Art eines Turas ausgebildet. Eine weitere vorteilhafte weitere Ausführungsform des erfindungsgemäßen Einbaufertigers sieht vor, dass das Antriebsrad an seinem Umfang wenigstens einen Vorsprung zum Eingriff mit der Vortriebseinrichtung aufweist und an der Vortriebseinrichtung passend ausgebildete Ausnehmungen zum Eingriff mit dem Vorsprung vorgesehen sind. In dieser Ausführung ist das Antriebsrad beispielsweise als Ritzel ausgeführt und greift in der Vortriebseinrichtung vorgesehe regelmäßig beanstandete Ausnehmungen ein. Ist die Vortriebseinrichtung als Kette ausgebildet, greifen die Zähne des Ritzels in die Kettenglieder ein und bewirken damit den Formschluss zwischen Vortriebseinrichtung und Antriebsrad. Durch diesen formschlüssigen Eingriff wird eine Übertragung der Antriebskraft auf die Vortriebseinrichtung erreicht. Eine vorteilhafte Ausführungsform der Erfindung sieht vor, dass die Vortriebseinrichtung eine Führung aufweist, die gleichfalls als Vorsprung ausgebildet sein kann und bevorzugt als in Umlaufrichtung verlaufende, durchgehende Leiste oder als in Umlaufrichtung verlaufend angeordnete Nasen oder Führungsblöcken ausgebildet ist. Diese Leiste kann dann mit dem Antriebsrad in Eingriff gebracht werden und gleichzeitig in einem entsprechend ausgebildeten Laufrad geführt werden. Als günstig wird in diesem Zusammenhang erachtet, wenn das Laufrad am Umfang die umlaufende Nut aufweist, in der die Führung an der Vortriebseinrichtung aufgenommen wird. Wird nun die Vortriebseinrichtung beziehungsweise die an der Vortriebseinrichtung vorgesehene Führung beziehungsweise der Vorsprung mit dem Laufrad in Eingriff gebracht, so wird es als empfehlenswert erachtet, wenn die Führung, sei sie als Leiste oder Nasen/Blöcke ausgebildet, wenigstens mit den Seitenflächen der Nut in dem Laufrad kraftschlüssig in Eingriff steht und somit durch die hier auftretende Gleitreibung eine Übertragung der Antriebskraft auf das Umlaufrad beziehungsweise Laufrad stattfindet.

Eine Weiterbildung des erfindungsgemäßen Einbaufertigers sieht vor, dass die Vortriebseinrichtung, die mit dem Laufrad in Eingriff steht, die Lauffläche beziehungsweise die in der Lauffläche angeordneten Nuten oder sonstigen Ausnehmungen vollständig abdeckt. Durch diese Ausgestaltung wird erreicht, dass die Lauffläche beziehungsweise die innere Fläche des Laufrades abgeschlossen gegenüber dem mit dem Einbaufertiger aufgetragenen Bodenbelag ist und somit keine Verschmutzungen in das Laufrad eingetragen werden.

Um die Laufruhe der Vorrichtung beziehungsweise des Einbaufertigers zu erhöhen, wird es als günstig angesehen, wenn das Laufrad eine Federung aufweist. Durch diese Federung können leichte Unebenheiten des Untergrundes ausgeglichen werden. Daneben besteht auch die Möglichkeit, dass das Antriebsrad eine Federung aufweist, die den gleichen Zweck erfüllt. Im Betrieb erfolgt eine Dehnung der Vortriebseinrichtung, sodass auch hier Unregelmäßigkeiten im Gleichlauf des Einbaufertigers und eine verschlechterte Kraftübertragung auftreten können. Um eine gleichmäßige Spannung der Vortriebseinrichtung zu erreichen, wird es als besonders vorteilhaft erachtet, wenn der Einbaufertiger eine Spannvorrichtung aufweist, die eine Regulierung der Spannung der Vortriebseinrichtung zulässt. Es ist in diesem Zusammehang vorgesehen, dass die Spannung der Vortriebseinrichtung manuell oder automatisch durchgeführt wird. Für eine manuelle Betätigung der Spannvorrichtung weist diese entsprechend angeordnete Betätigungshebel auf, während eine automatische Regulierung der Spannung der Vortriebseinrichtung über einen entsprechenden Menüpunkt in der Steuerung des Einbaufertigers vorgesehen werden kann. Die Spannvorrichtung ist bevorzugt am Einbaufertiger vorgesehen oder aber direkt dem Laufrad beziehungsweise dem Antriebsrad zugeordnet. Eine am Einbaufertiger vorgesehene Spannvorrichtung greift dabei, beispielsweise über eine verschwenkbare Spannrolle, direkt an der Vortriebseinrichtung an und erhöht beziehungsweise senkt deren Spannung. Die Spannrolle wirkt dabei auf das Leertrum. Die an dem Laufrad beziehungsweise dem Antriebsrad vorgesehene Spannvorrichtung wirkt entweder direkt auf das Lauf- beziehungsweise Antriebsrad und verändert dessen Position oder aber greift an der Lagerung des entsprechenden Rades an und verändert hier den Sitz des Lagers. Die Spannvorrichtung kann als Feder, Spindelschraube oder in einer sonstigen als geeignet erachteten Ausführung vorgesehen sein. Daneben ist auch die Verwendung von hydraulisch, pneumatisch oder federbeaufschlagten Elementen, beispielsweise nach Art eines Stoßdämpfers, denkbar.

Als günstig wird angesehen, wenn das Laufrad und/oder das Antriebsrad als Scheibe, Rolle oder Walze ausgebildet ist. Vorteilhaft an dieser Ausführungsform des erfindungsgemäßen Einbaufertigers ist, dass so eine besonders leichte Austauschbarkeit der entsprechenden Räder gewährleistet ist, und die Wartungskosten für die Vorrichtung dadurch erheblich gesenkt werden, das Normbauteile verwendet werden können. Auch lassen sich bei einem als Scheibe, Rolle oder Walze ausgeführten Laufrad oder Antriebsrad in einfacher Art und Weise die vorher bereits genannten Ausnehmungen beziehungsweise Vorsprünge zum Eingriff mit der Vortriebseinrichtung realisieren. Die Auflagefläche der Vortriebseinrichtung kann dadurch vergrößert werden, dass zwei oder mehr unmittelbar nebeneinander angeordnete Lauf- oder Antriebsräder vorgesehen sind. Hierdurch wird zum Einen die Kraftübertragung von dem Antrieb auf die Vortriebseinrichtung verbessert, zum Anderen auch der Gleichlauf beziehungsweise die Laufruhe des Einbaufertigers erhöht.

Die Vortriebseinrichtung ist günstiger Weise als umlaufende Laufkette oder umlaufendes Laufband ausgebildet. Daneben wird es als günstig angesehen, wenn die Vortriebseinrichtung als Gliederlaufband ausgebildet ist.

Bei der Verwendung einer Laufkette als Vortriebseinrichtung ist diese bevorzugt als Gleis- oder Gliederkette ausgebildet. Diese Ausführungsform ist in sofern vorteilhaft, als dass ein einfacher Austausch einzelner Bestandteile der Kette durchgeführt werden kann, und sich somit ein Zeitvorteil bei der Wartung ergibt. Darüber hinaus kann durch die Entnahme einzelner Kettenglieder die Länge der Vortriebseinrichtung eingestellt und somit Spannungsverluste ausgeglichen werden. Die Verwendung einer Gleis- oder Gliederkette erweist sich auch in sofern als vorteilhaft, als dass die einzelnen Kettenglieder für den Eingriff mit einem Laufrad, der erfindungsgemäße kraftschlüssig stattfindet, entsprechend ausgeführt werden kann. Hierbei bietet sich beispielsweise eine besondere Behandlung der auf dem Laufrad aufliegenden Oberfläche der einzelnen Kettenglieder an. Hier kann beispielsweise eine Beschichtung mit einem reibungserhöhenden Mittel stattfinden. Darüber hinaus gesteht auch die Möglichkeit die Unterseite der Gleis- oder Gliederkette, die der Lauffläche des Laufrades zugewandt ist, entsprechend aufzurauen. Als Material für die Gleis- oder Gliederkette, ebenso, wie für das Laufband oder sonstige umlaufendes Bänder oder Ketten der Vortriebseinrichtung, kann neben Kunststoff selbstverständlich auch Metall verwendet werden. Darüber hinaus besteht die Möglichkeit Kunststoffe und Metall zu kombinieren und beispielsweise einen Zugstrang der Vortriebseinrichtung aus Metall zu bilden und diesen dann mit einer entsprechenden Kunststoffbeschichtung zu versehen. Daneben besteht auch die Möglichkeit, zu einer weiteren Verbesserung der Laufruhe des Einbaufertigers die Kette beziehungsweise die Kettenglieder oder das Band mit einer Gummibeschichtung zu versehen. Diese Ausführungsform der Vortriebseinrichtung nutzt dann die besonderen Dämpfungseigenschaften des Gummis, der vollflächig auf der Vortriebseinrichtung aufgetragen oder als aufsteckbare, aufsetzbar oder aufschraubbare Gummipads ausgeführt sein kann.

Eine weitere vorteilhafte Ausführungsform des erfindungsgemäßen Einbaufertigers sieht vor, dass der Abstand zwischen dem Laufrad und dem Antriebsrad variabel einstellbar ist. Daneben besteht auch die Möglichkeit, dass zusätzliche Laufräder am Einbaufertiger angeordnet werden und damit die Laufruhe der Vorrichtung verbessert wird. Durch die variable Gestaltung des Abstandes zwischen Laufrad und Antriebsrad kann die Lauffläche des Einbaufertigers flexibel an die unterschiedlichsten Untergründe, ebenso, wie an unterschiedliche Radien der beispielsweise beim Bau von Laufbahnen in Stadien auftretenden Bahngeometrien angepasst werden. So wird man hier beispielsweise den Abstand besonders gering einstellen, während bei der Belegung von großen Flächen mit Sportbelägen oder elastischen Tragschichten ein weiter Abstand zwischen Laufrad und Antriebsrad als vorteilhaft erachtet wird. In einer Weiterbildung der Erfindung ist vorgesehen, dass die Abstandseinstellung zwischen Laufrad und Antriebsrad automatisch erfolgt. Hierbei ist es möglich, dass der Einbaufertiger entsprechende Verstellschienen oder einen variabel veränderbaren Rahmen für das Fahrwerk aufweist, an denen die Halterungen für das Laufrad beziehungsweise Antriebsrad verschiebbar angeordnet sind. Darüber hinaus besteht auch die Möglichkeit eine entsprechende Vielzahl von Ausnehmungen am Einbaufertiger anzuordnen, in denen die Achsen der Laufräder eingeführt werden. Neben einer automatischen Veränderung des Abstandes, die beispielsweise auch durch einen entsprechenden Punkt in der zentralen Steuerung des Einbaufertigers abgelegt sein kann, besteht nach wie vor die Möglichkeit, den Abstand zwischen den Rädern manuell einzustellen. Hierzu empfiehlt sich wieder die Anordnung entsprechender Hebel an dem Einbaufertiger.

In den nachfolgend beschriebenen Zeichnungen sind vorteilhafte Ausführungsformen der Erfindung schematisch dargestellt. Es zeigt
- Fig. 1a: den erfindungsgemäßen Einbaufertiger in Seitenansicht;
- Fig. 1b: ein Detail des erfindungsgemäßen Einbaufertigers in Vorderansicht;
- Fig. 2a: eine mögliche Ausführungsform des Laufrades des erfindungsgemäßen Einbaufertigers in perspektivischer Darstellung;
- Fig. 2b: eine weitere Darstellung des Laufrades des erfindungsgemäßen Einbaufertigers mit umlaufendem Laufgurt;
- Fig. 3a: eine bevorzugte Ausführungsform eines Laufrades in perspektivischer Darstellung und
- Fig. 3b: das Laufrad der Fig. 3a in Schnittdarstellung.

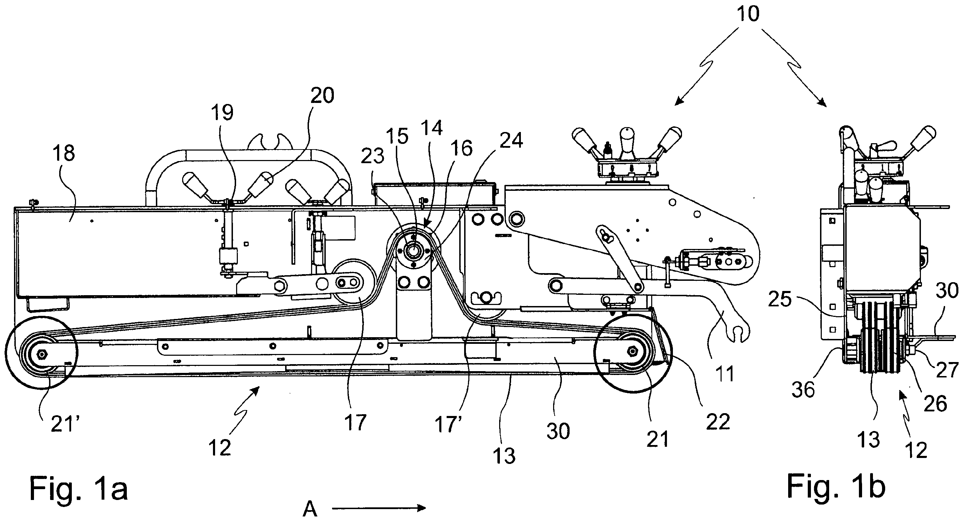

Fig. 1a zeigt eine bevorzugte Ausführungsform eines erfindungsgemäßen Einbaufertigers 10 in der Seitenansicht. Der Einbaufertiger 10 umfasst neben einer Haltevorrichtung 11 für mit dem Einbaufertiger 10 zu verbindende Glättbohlen (nicht dargestellt) ein Laufwerk 12, das im Ausführungsbeispiel der Fig. 1a als Bandlaufwerk ausgeführt ist. Neben der Ausführung des Laufwerkes 12 als Bandlaufwerk ist selbstverständlich auch die Verwendung von Kettenlaufwerken möglich. Das Laufwerk 12 dient der Fortbewegung des Einbaufertigers 10. Vorrangige Aufgabe des Laufwerkes beziehungsweise des umlaufenden Bandes 13 ist es, die Bodenauflagefläche des Einbaufertigers 10 zu vergrößern, um dadurch einerseits die Traktion des Einbaufertigers 10 zu verbessern und um andererseits das auf dem Untergrund auflagernde Gewicht des Einbaufertigers 10 günstiger zu verteilen. Das Band 13 ist im Ausführungsbeispiel als durchgehendes Band 13 ausgebildet. Daneben besteht selbstverständlich auch die Möglichkeit das Band 13 als Gliederband auszuführen. Eine alternative Ausführungsform sieht die Verwendung eines Kettenlaufwerkes mit umlaufender Gleit- oder Gliederkette vor. Der Einbaufertiger 10 verfügt über eine zentral angeordnete Antriebseinheit 14, die über ein auf einer Welle 15 angeordnetes Ritzel 16 mit dem Band 13 in Eingriff steht, und dieses antreibt. Zum Eingriff mit dem Ritzel 16 weist das Band 13 Ausnehmungen auf, in die die Zähne des Ritzels 16 eingreifen. Über das der Antriebseinheit 14 zugeordnete Ritzel 16 wird ein Formschluss zur Kraftübertragung auf das Band 13 gewährleistet. Dem angetriebenen Ritzel 16 unmittelbar zugeordnet weist der Einbaufertiger 10 zwei Spannrollen 17, 17' auf. Durch die Spannrollen 17, 17' kann, da diese verstellbar gelagert sind, die Spannung des Bandes 13 variiert werden. Auch ist denkbar, dass an den Spannrollen 17 Reinigungsvorrichtungen für das Band 13 angeordnet sind, sodass eine Verschmutzung des Ritzels 16 mit am Band 13 anhaftendem Bodenbelag stattfindet. Aufgrund dieser Verschmutzungen würde die Länge der Ritzelzähne verkürzt und somit auch der Eingriff des Ritzels 16 mit den Ausnehmungen im Band 13 verschlechtert. Bei zunehmender Verschmutzung des Ritzels 16 könnte es bis zum Abspringen des Bandes 13 vom Ritzel 16 kommen. Hieraus ergibt sich ein zusätzlicher Wartungsbedarf, wenn die regelmäßige Reinigung des Bandes 13 unterbleibt. Die Verstellung der Position der Spannrollen 17, 17' erfolgt im Ausführungsbeispiel der Fig. 1 über einen auf der Oberseite 18 des Einbaufertigers 10 angeordneten Spindeltrieb 19, der über einen zugeordneten, und die Oberseite 18 des Einbaufertigers 10 überragenden Hebel 20 betätigt wird. Der Spindeltrieb wirkt im Ausführungsbeispiel unmittelbar auf die federbeanschlagte Halterung der ersten Spannrolle 17' und variiert deren Position.

Das Band 13 verläuft in einem an der Unterseite des Einbaufertigers 10 angeordneten Laufwerk 12 und verbindet das Ritzel 16 mit den Laufrädern 21, 21'. Diese sind im erfindungsgemäßen Einbaufertiger 10 nicht als weitere Ritzel ausgebildet, sondern stehen mit dem Band 13 kraftschlüssig in Eingriff. Die kraftschlüssige Beaufschlagung der Laufräder 21 durch das Band 13 kann ebenfalls über die Verstellung der Spannrollen 17, 17' verstellt werden. Die Beaufschlagung ist dabei abhängig von dem befahrenen Untergrund beziehungsweise von dem mit dem Einbaufertiger 10 zu verarbeitenden Material. Dem ersten Laufrad 21, in Fahrtrichtung A des Einbaufertigers 10 vorgelagt, befindet sich eine Glättleiste 22. Die Glättleiste 22 verhindert, dass Materialanhäufungen, die sich vor dem Einbaufertiger 10 befinden, eine Beeinträchtigung des Vortriebs des Einbaufertigers 10 bewirken. Die Glättleiste 22, die in ihrer Höhe und Position ebenfalls einstellbar ist, ist dabei so angeordnet, dass es gerade an die Oberfläche des durch die Glättbohlen (nicht dargestellt) verteilten Materials heranreicht.

Das Band 13 ist als umlaufendes Endlosband ausgebildet. An dem dem ersten Laufrad 21 in Fahrtrichtung A gegenüberliegenden Ende des Laufwerks 12 befindet sich ein weiteres Laufrad 21' über das eine Umlenkung des Bandes 13 auf die Antriebseinheit 14 hin erfolgt. Das weitere Laufrad 21' ist wie das erste Laufrad 21 ebenfalls als kraftschlüssig mit dem Band 13 in Eingriff stehende Rolle ausgebildet. Es weist eine reibungserhöhende Oberfläche auf, sodass hier ein entpsrechender Schlupf des Bandes 13 gewährleistet wird. Das Band 13 kann als umlaufender Gurt, jedoch auch als Gliederband ausgebildet sein. Als Material für das Band 13 kommt sowohl Kunststoff als auch Metall sowie Metallgeflechte beziehungsweis Kunststoff-Metallmischungen in Frage. Auch denkbar ist, dass das Band 13 eine rutschhemmende Beschichtung auf seiner der zu bearbeitenden Oberfläche zugewandten Seite aufweist. Der Abstand zwischen den Laufrädern 21, 21' kann ebenfalls variabel eingestellt werden. Hierzu ist der die Laufräder 21, 21' verbindende Bereich des Rahmens 30 des Laufwerkes 12 durch Einsetzen von Verlängerungsteilen beziehungsweise durch deren Entnahme, variabel ausgebildet. Daneben besteht auch die Möglichkeit, die Laufräder 21, 21' separat mit einer Federung auszurüsten. Hierdurch können Unebenheiten des befahrenen Untergrundes ausgeglichen werden. Dies wiederum erhöht die Arbeitsgenauigkeit des Einbaufertigers 10. Der Einbaufertiger 10 kann sowohl selbstfahrend ausgebildet sein, als auch als Anhängevorrichtung. Bei einem selbstfahrend ausgebildeten Einbaufertiger erfolgt der Antrieb über einen Elektro- oder Verbrennungsmotor, der entweder direkt an der Antriebseinheit 14 angreift oder ein zusätzliches Getriebe (nicht dargestellt) umfasst. Die angetriebene Welle 15 des Einbaufertigers 10 ist in einem Lager 23 aufgenommen. Zusätzlich zu diesem Lager 23 ist am Ende der Welle 15 ein die Welle 15 umgebender Kragen 24 vorgesehen, der eine zusätzliche Führung für das über das ebenfalls auf der Welle 15 angeordnete Ritzel 16 des Antriebs 14 geführte Band 13 bewirkt und das Abspringen des Bandes 13 vom Ritzel 16 verhindert. Der Kragen 24 kann dabei sowohl auf der Welle 15 und damit drehbar beziehungsweise im Bereich des Ritzels 16 fest angeordnet sein.

Die Fig. 1b zeigt ein Detail des erfindungsgemäßen Einbaufertigers 10 in der Vorderansicht. Der dargestellte Einbaufertiger 10 weist ebenfalls ein mit einem Band 13 ausgestattetes Laufwerk 12 auf. Die Antriebseinheit 14 ist im Ausführungsbeispiel der Fig. 1b durch den oberen Teil des Einbaufertigers 10 verdeckt. Das umlaufende Band 13 läuft in den oberen Teil des Einbaufertigers 10 ein und steht dort mit dem nicht sichtbaren Ritzel 16 in Eingriff. Der Einbaufertiger 10 der Fig. 1b verfügt im vorliegenden Fall über ein als Zwillingsrad ausgebildetes Laufrad 21 sowie über zwei parallel geführte Bänder 13. Durch diese Anordnung wird die Auflagefläche weiter erhöht und gleichzeitig eine verbesserte Vorschubleistung des Einbaufertigers 10 erreicht. Ebenfalls gewährleistet wird durch die Verwendung eines Zwillingslaufrades sowie die Anordnung von zwei umlaufenden Bändern 13 der Gleichlauf des Einbaufertigers 10. In Fig. 1b ebenfalls ersichtlich, wird eine Seitenverkleidung 25 des Einbaufertigers 10, die nahezu bis an die untere Auflagefläche des Bandes 13 auf der zu bearbeitenden Oberfläche heranreicht und somit eine Verkleidung für das Laufwerk 12 des Einbaufertigers 10 bildet.

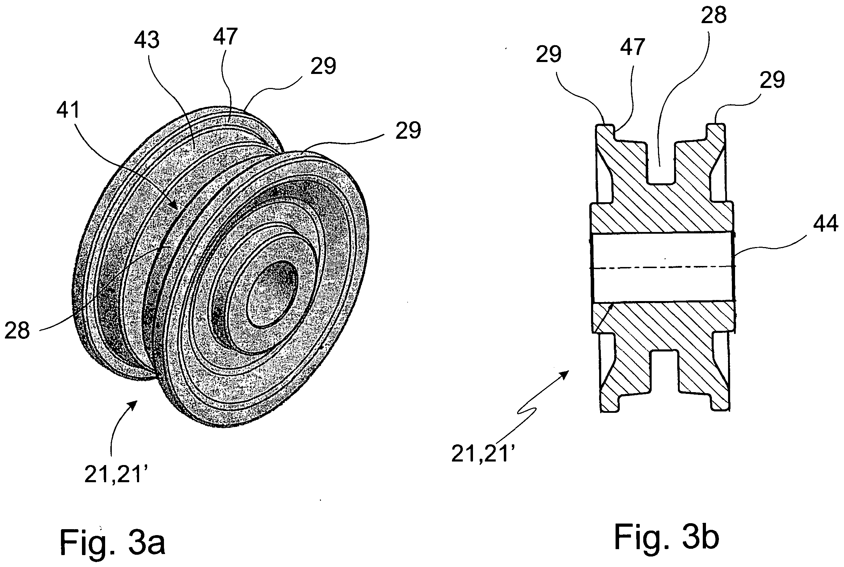

Das Band 13 ist im Ausführungsbeispiel der Fig. 1b als Keilrippenriemen ausgebildet und weist insgesamt drei prallel angeordnete, in Umlaufrichtung verlaufende Keilrippen 26 auf, die mit entsprechenden Nuten 28, die im Laufrad 21, 21' vorgesehen sind (vgl. Fig. 3a und 3b) in Eingriff bringbar sind und damit den Kraftschluss zwischen den Laufrädern 21, 21' und dem Band 13 verbessern. Die Laufräder 21, 21' sind an einer Achse 27 gelagert und verfügen über keinen eigenen Antrieb. Der Antrieb der Laufräder 21, 21' erfolgt somit lediglich über das umlaufende Endlosband 13. Die Achse 27 ist in einem Rahmen 30 des Laufwerkes 12 angeordnet.

Zwar verfügen die Laufräder 21, 21' über keinen eigenen Antrieb, ihre Position ist aber dennoch in dem Laufwerk 12 beziehungsweise dem Rahmen 30 variabel, um so eine Veränderung der Spannung des Bandes 13 durchführen zu können. Der Rahmen 30 weist hierzu beispeilsweise eine Vielzahl von Bohrungen (nicht dargestellt) als Aufnahme für die Achsenden 36 auf.

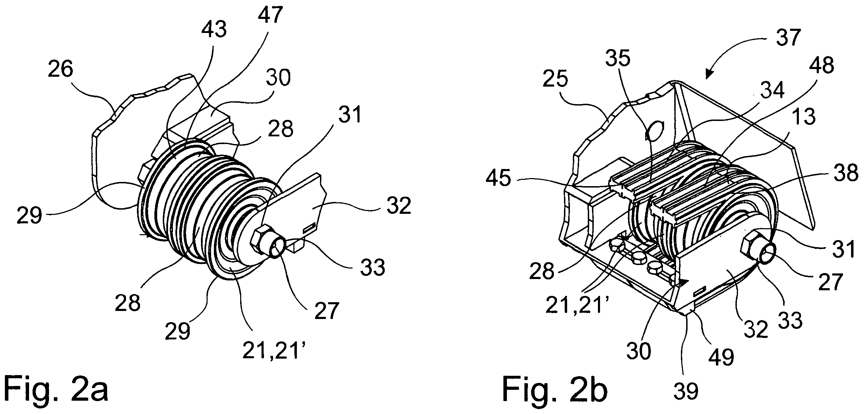

Fig. 2a zeigt die Anordnung von Laufrädern 21, 21' des erfindungsgemäßen Einbaufertigers 10 in einem Rahmen 30. Die dargestellte Anordnung umfasst zwei nebeneinander angebrachten Laufräder 21, 21', die über eine gemeinsame Achse 27 verfügen. Die gezeigte Anordnung bildet einen Teil des Laufwerkes 12 eines Einbaufertigers 10. Der Einbaufertiger 10 umfasst in der Regel zwei derartige Anordnungen, die parallel beanstandet an zwei Längsseiten des Einbaufertigers 10 angeordnet sind. Die Laufrollen 21, 21' bilden den vorderen beziehungsweis hinteren Umlenkpunkt für das Band 13 des Laufwerkes 12. Die Laufräder 21, 21' umfassen jeweils eine mittige Nut 28 sowie am Umfang nach Art eines Spurkranzes ausgebildete Wülste 29, die an den Außenkanten 38 des Bandes 13 anliegen und hier eine Führung des Bandes 13 auf den Laufrädern 21, 21' sicherstellen. Gleichzeitig verhindern die Wülste 29, dass das Band 13 vom Laufrad 21, 21' abspringt. Durch die Wülste 29 wird weiterhin verhindert, dass, bedingt dadurch, dass diese unmittelbar am Band 13 anliegen, Verschmutzungen unter das Band 13 gelangen und sich am Laufrad 21, 21' absetzen. Die Wülste 29 weisen zum verbesserten Kraftschluss und zum Abschluss der Lauffläche 43 an die Ausformung der Außenkanten 38 des Bandes 13 angepasste Flanken 47 auf. Verschmutzungen würden dazu führen, dass die umlaufende Nut 28 verschmutzt wird und es zu einer Aufhebung des Kraftschlusses zwischen Laufrad 21, 21' und Band 13 kommt. In die Nut 28 hinein ragt eine Mittelrippe 45 des Bandes 13, die mit der Nut 28 ebenfalls kraftschlüssig in Eingriff steht. Die dem Band 13 zugewandten Oberflächen des Laufrades 21, 21' verfügen über eine reibungserhöhende Beschichtung, die den Kraftschluss zwischen Band 13 und Laufrad 21, 21' weiter verbessert. Die die Laufräder 21, 21' aufnehmende Achse 27 ist in einer Aufnahme 31 gelagert, die an dem das Laufwerk 12 tragenden Rahmen 30 des Einbaufertigers 10 vorgesehen ist. An der Außenseite des Einbaufertigers 10 weist dieser eine Seitenverkleidung 25 des Laufwerkes 12 auf, die den äußeren Abschluss des Laufwerkes 12 bildet. Zum Inneren des Einbaufertigers 10 hin wird das Laufwerk 12 durch einen Holm 32 des Rahmens 30 begrenzt. Die Achse 27 ist auf der Innenseite des Einbaufertigers 10 durch eine Mutter 33 gesichert. Müssen die Laufräder 21, 21', beispielsweise zu Wartungszwecken, entnommen werden, so genügt es, diese Mutter 33 zu lösen, um die Achse 27 und die daran angeordneten Laufräder 21, 21' aus dem Einbaufertiger 10 zu entnehmen.

Fig. 2b zeigt die den Laufrädern 21, 21' der Fig. 2a gegenüberliegenden Teil des Laufwerkes 12, der im Ausführungsbeispiel mit dem Band 13 teilweise belegt ist. Dieser umfasst ebenfalls zwei Laufräder 21, 21', die in der Fig. 2b mit einem umlaufenden Band beziehungsweise einem Abschnitt des umlaufenden Bandes 13 dargestellt sind. Hieraus wird ersichtlich, dass das Band 13 als Gliederband ausgebildet ist, das aus jeweils getrennten Gliedern 34 zusammen gesetzt ist. Das Band 13 ist als Rippenriemen ausgebildet, der einen im Wesentlichen symmetrischen Querschnitt aufweist. Der Rippenriemen umfasst dabei insgesamt sechs Rippen 35, die auf der Unter- beziehungsweise Oberseite des Bandes 13 vorgesehen sind. Diese Rippen 35 bilden gleichzeitig Führungen, die mit entsprechenden Nuten 28 beziehungsweise Ausnehmungen der Laufräder 21, 21' in Eingriff stehen. Darüber hinaus weist das Band eine Mittelnut 48 auf, über die ein Eingriff mit dem Ritzels 16 der Antriebseinheit 14 stattfindet. Aufgrund der Struktur des Bandes 13 wird der Kraftschluss zwischen den Laufrädern 21, 21' und dem Band 13 sichergestellt und der Vortrieb des Einbaufertigers 10 wesentlich verbesssert. Gleichzeitig führt die Struktur des Bandes 13 mit Rippen 35 zu einer weiteren Erhöhung der Auflageoberfläche des Laufwerkes 12 auf der zu bearbeitenden Oberfläche.

Die in Fig. 2b dargestellten Laufräder 21, 21' verfügen ebenfalls über eine Achse 27, die in einem das Laufwerk 12 tragenden Rahmen 30 gelagert ist. In dem Ausführungsbeispiel der Fig. 2b umschließt das Gehäuse 37 die Laufräder 21, 21' beziehungsweise das Laufwerk 12 an zwei Seiten. Der, in der Darstellung, vordere Teil des Rahmens 30 steht mit der Seitenverkleidung 25 über einen Steg 49, an dessen Unterseite 39 das Band 13 geführt ist, in Verbindung. Der Steg 49 weist hierzu entsprechende Führungsvorsprünge auf, die an den Außenkanten 38 des Bandes 13 anliegen und dessen Verschiebung verhindern.

Fig. 3a zeigt ein Laufrad 21, 21' des erfindungsgemäßen Einbaufertigers 10 in perspektivischer Darstellung, während die Fig. 3b das Laufrad 21, 21' in geschnittener Darstellung zeigt. Das Laufrad 21, 21' verfügt über einen Laufradkörper 41 sowie über spurkranzartigen Wülste 29, die entlang des Umfangs des Laufradkörpers 41 angeordnet sind. Der Laufradkörper 41 weist eine Lauffläche 43 auf, in der eine umlaufende Nut 28 eingeschnitten ist. Das Laufrad 21, 21' steht mit einem Band 13 des Laufwerks 12 des Einbaufertigers 10 kraftschlüssig im Eingriff. Das Band 13 liegt dabei auf der Lauffläche 43 auf. Um den Kraftschluss zu verbessern, kann einerseits das Band 13 auf seiner dem Laufrad 21, 21' zugewandten Oberfläche eine reibungserhöhende Auflage aufweisen, darüberhinaus besteht auch die Möglichkeit, dass die Lauffläche 43 des Laufrades 21, 21' eine entsprechende Oberflächenbehandlung aufweist. Hierzu zählen beispielsweise eine Auflage aus einem reibungserhöhenden Beschichtungsmittel, beispielsweise einem entsprechenden Kunststoff oder aber die Einbringung von Oberflächenstrukturierungen. In die Nut 28 greifen am Band vorgesehene Führungsleisten, die auch unterbrochen als Führungsvorsprünge oder -blöcke ausgebildet werden können, ein, die dazu dienen einen formschlüssigen Eingriff des Bandes 13 am Antriebsrad/Ritzel 16 des Einbaufertigers 10 sicherzustellen. Aufgrund dessen, dass zwischen dem Laufrad 21, 21' und dem Band 13 nur ein kraftschlüssiger Eingriff stattfindet und kein Formschluss angestrebt wird, wird die Laufruhe des Einbaufertigers 10 weiter erhöht, da eine entsprechende Rüttelbewegung, die immer dann auftritt, wenn ein Formschluss stattfindet und insbesondere dann, wenn Ritzel 16 beziehungsweise Ritzelzähne in eine Kette formschlüssig eingreifen, vermieden wird. Die spurkranzartigen Wülste 29 bilden die Führung für das Band 13 und verhindern ein Abrutschen des Bandes 13 vom Laufradkörper 41. Das Laufrad 21, 21' verfügt zusätzlich über eine zentral angeordnete Nabe 44, über die das Laufrad 21, 21' auf einer Laufachse 27 angeordnet werden kann. Die Nabe kann zur Verbesserung der Laufeigenschaften des Einbaufertigers 10 gelagert ausgebildet sein. Hierzu bieten sich in der Nabe oder auf der Achse 27 angeordnete Wälz oder Kugellager an. Die Nut 28, die im Ausführungsbeispiel der Fig. 3b einen U-förmigen Querschnitt aufweist, kann in ihrer Ausführung an die Ausgestaltung der gegebenenfalls am Band 13 vorgesehenen Führungsleiste am Band 13 angepasst werden. Es ist zum Beispiel möglich, dass die Nut V-förmig ausgebildet ist oder in ihrem der Nabe zugewandten Bereich eine Aufweitung aufweist, in die die Führungsleiste eingreift. Hierbei ist jedoch vorgesehen, dass die Führungsleiste dauerhaft in den Laufrädern geführt ist. Es folgt somit, dass das Ritzel 16 des Fahrwerkes 12 auf gleicher Höhe am Fahrwerk 12 angeordnet ist wie die Laufräder 21, 21', um ein Ausfädeln der Führungsleiste zu vermeiden. Aufgrund dessen, dass das Laufband der den Laufradkörper 41 bedeckt und einen Abschluss für die Lauffläche 43 bildet, wird das Eindringen von Schmutz in den Laufradkörper 41 beziehungsweise bis zu den Laufflächen 43 vermieden. Hierdurch wird zum Einen der Gleichlauf der Laufräder 21, 21' sichergestellt, zum Anderen der Wartungsaufwand beziehungsweise der Ersatzteilbedarf reduziert. Die Laufräder 21, 21' können je nach Anforderungen an den Einbaufertiger 10 aus verschiedenen Materialien gebildet sein. So bieten sich beispielsweise Werkstoffe wie Stahl oder Metallguß, für Einbaufertiger, die vor allem schwere Materialien verarbeiten, an. In einer leichteren Ausführungsform des Einbaufertigers 10 können die Laufräder 21, 21' aus Kunststoff gefertigt werden und senken damit das Gesamtgewicht des Einbaufertigers.

## Patentansprüche

1. Einbaufertiger, insbesondere für die Verwendung bei der Installation von Kunststoff-Sportbelägen und/oder teilelastischen Tragschichten, umfassend ein Fahrwerk mit wenigstens einer umlaufenden Vortriebseinrichtung und wenigstens einem mit der Vortriebseinrichtung in Eingriff stehenden Laufrad, wobei das Laufrad (21, 21') kraftschlüssig mit der Vortriebseinrichtung in Eingriff steht, **dadurch gekennzeichnet, dass** das Laufrad (21, 21') über einen Laufradkörper (41) verfügt, an dessen Umfang eine oder mehrere spurkranzartige Wülste (29) angeordnet sind und der Laufradkörper (41) eine Lauffläche (43) aufweist, in der eine umlaufende Nut (28) eingeschnitten ist.

2. Einbaufertiger nach Anspruch 1, **dadurch gekennzeichnet, dass** die spurkranzartigen Wülsten (29) jeweils beidseitig außen neben der Lauffläche (43) angeordnet sind und die Lauffläche (43) durch die umlaufende Nut (28) gebildet ist.

3. Einbaufertiger nach einem oder mehreren der vorhergehenden Ansprüche, **dadurch gekennzeichnet, dass** ein Antriebsrad, insbesondere Ritzel (16) vorgesehen ist, das formschlüssig mit der Vortriebseinrichtung in Eingriff steht und/oder das Antriebsrad eine Lauffläche aufweist und das Antriebsrad und/oder die Lauffläche eine reibungserhöhende Beschichtung und/oder Oberflächenbehandlung aufweist.

4. Einbaufertiger nach einem oder mehreren der vorhergehenden Ansprüche, **dadurch gekennzeichnet, dass** das Laufrad (21, 21') die Lauffläche (43) aufweist und das Laufrad 21, 21') und/oder Lauffläche (43) eine reibungserhöhende Beschichtung und/oder eine Oberflächenbehandlung aufweist.

5. Einbaufertiger nach einem oder mehreren der Ansprüche 3 oder 4, **dadurch gekennzeichnet, dass** die Vortriebseinrichtung an ihrer dem Antriebsrad zugewandten Oberfläche wenigstens eine Führung zum Eingriff mit dem Antriebsrad und das Antriebsrad passend ausgebildete Ausnehmungen zum Eingriff mit der Führung aufweist und/oder das Antriebsrad an seiner der Vortriebseinrichtung zugewandten Oberfläche wenigstens einen Vorsprung zum Eingriff mit der Vortriebseinrichtung aufweist und an der Vortriebseinrichtung insbesondere passend ausgebildete Ausnehmungen zum Eingriff mit dem Vorsprung vorgesehen sind.

6. Einbaufertiger nach Anspruch 5 , **dadurch gekennzeichnet, dass** das Antriebsrad als Ritzel (16) oder Turas ausgebildet ist.

7. Einbaufertiger nach Anspruch 5 bis 6, **dadurch gekennzeichnet, dass** die Führung oder der Vorsprung als in Umlaufrichtung verlaufende, durchgehende Leiste oder als in Umlaufrichtung verlaufend angeordnete Nasen beziehungsweise Blöcke ausgebildet ist.

8. Einbaufertiger nach einem oder mehreren der Ansprüche 5 bis 7, **dadurch gekennzeichnet, dass** das Laufrad (21, 21') am Umfang und/oder in der Lauffläche (43) die Nut (28) zur Aufnahme der Führung aufweist, wobei die Führung wenigstens mit den Seitenflächen der Nut (28) kraftschlüssig in Eingriff steht.

9. Einbaufertiger nach einem oder mehreren der vorhergehenden Ansprüche, **dadurch gekennzeichnet, dass** das Laufrad (21, 21'), die Lauffläche (43) und/oder die Nut (28) durch die Vortriebseinrichtung, insbesondere vollständig abgedeckt wird/werden und/oder das Laufrad (21, 21') und/oder das Antriebsrad ein Federung aufweist.

10. Einbaufertiger nach einem oder mehreren der vorhergehenden Ansprüche, **dadurch gekennzeichnet, dass** eine Spannvorrichtung zur manuellen und/oder automatischen Regulierung der Spannung der Vortriebseinrichtung vorgesehen ist.

11. Einbaufertiger nach Anspruch 10, **dadurch gekennzeichnet, dass** die Spannvorrichtung am Einbaufertiger (10) und/oder im Bereich des Laufrades (21, 21') und/oder des Antriebsrades angeordnet ist.

12. Einbaufertiger nach einem oder mehreren der vorhergehenden Ansprüche, **dadurch gekennzeichnet, dass** das Laufrad (21, 21') und/oder das Antriebsrad als Scheibe, Rolle oder Walze ausgebildet ist.

13. Einbaufertiger nach einem oder mehreren der vorhergehenden Ansprüche, **dadurch gekennzeichnet, dass** das zwei oder mehr unmittelbar nebeneinander angeordnete Laufräder (21, 21') und/oder Antriebsräder vorgesehen sind.

14. Einbaufertiger nach einem oder mehreren der vorhergehenden Ansprüche, **dadurch gekennzeichnet, dass** die Vortriebseinrichtung als umlaufende Kette, umlaufendes Band (13) oder Gliederlaufband oder Endlosband ausgebildet ist und/oder die Kette als Gleis- oder Gliederkette ausgebildet ist.

15. Einbaufertiger nach einem oder mehreren der Ansprüche 3 bis 14, **dadurch gekennzeichnet, dass** der Abstand zwischen Laufrad (21, 21') und Antriebsrad variabel einstellbar ist, wobei die Abstandseinstellung zwischen Laufrad (21, 21') und Antriebsrad manuell oder automatisch erfolgt.

## Claims

1. A paver finisher, in particular for use in the installation of synthetic sporting surfaces and/or partially elastic supporting layers, comprising a chassis having at least one circulating feed device and at least one running wheel which engages with the feed device, wherein the running wheel (21, 21') engages with the feed device by friction, **characterized in that** the running wheel (21, 21') has a running wheel body (41), on the circumference of which are arranged one or more flange-like beads (29), and the running wheel body (41) has a running surface (43) in which a circumferential groove (28) is cut.

2. The paver finisher according to claim 1, **characterized in that** the flange-like beads (29) are in each case arranged on the outside on both sides adjacent to the running surface (43) and the running surface (43) is formed by a circumferential groove (28).

3. The paver finisher according to one or more of the preceding claims, **characterized in that** a drive wheel, in particular a pinion (16), which engages with the feed device in an interlocking manner, is provided, and/or the drive wheel has a running surface and the drive wheel and/or the running surface has a friction-increasing coating and/or surface treatment.

4. The paver finisher according to one or more of the preceding claims, **characterized in that** the running wheel (21, 21') has the running surface (43), and the running wheel (21, 21') and/or running surface (43) has a friction-increasing coating and/or a surface treatment.

5. The paver finisher according to one or more of claims 3 or 4, **characterized in that**, on its surface facing the drive wheel, the feed device has at least one guide for engaging with the drive wheel, and the drive wheel has suitably formed recesses for engaging with the guide, and/or, on its surface facing the feed device, the drive wheel has at least one projection for engaging with the feed device, and in particular suitably formed recesses for engaging with the projection are provided on the feed device.

6. The paver finisher according to claim 5, **characterized in that** the drive wheel is formed as a pinion (16) or sprocket.

7. The paver finisher according to claim 5 to 6, **characterized in that** the guide or projection is formed as a continuous strip running in the circumferential direction or as lugs or blocks running in the circumferential direction.

8. The paver finisher according to one or more of claims 5 to 7, **characterized in that** the running wheel (21, 21') has the groove (28) for accommodating the guide on the circumference and/or in the running surface (43), wherein the guide engages by friction at least with the side surfaces of the groove (28).

9. The paver finisher according to one or more of the preceding claims, **characterized in that** the running wheel (21, 21'), the running surface (43) and/or the groove (28) is/are covered, in particular completely, by the feed device, and/or the running wheel (21, 21') and/or the drive wheel has a spring system.

10. The paver finisher according to one or more of the preceding claims, **characterized in that** a tensioning device for manually and/or automatically controlling the tension of the feed device is provided.

11. The paver finisher according to claim 10, **characterized in that** the tensioning device is arranged on the paver finisher (10) and/or in the region of the running wheel (21, 21') and/or the drive wheel.

12. The paver finisher according to one or more of the preceding claims, **characterized in that** the running wheel (21, 21') and/or the drive wheel is formed as a disk, roll or roller.

13. The paver finisher according to one or more of the preceding claims, **characterized in that** two or more running wheels (21, 21') and/or drive wheels, which are arranged immediately adjacent to one another, are provided.

14. The paver finisher according to one or more of the preceding claims, **characterized in that** the feed device is formed as a circulating chain, circulating belt (13) or link conveyor belt or endless belt, and/or the chain is formed as a caterpillar track or link chain.

15. The paver finisher according to one or more of claims 3 to 14, **characterized in that** the distance between running wheel (21, 21') and drive wheel can be variably adjusted, wherein the adjustment of the distance between running wheel (21, 21') and drive wheel is carried out manually or automatically.

## Revendications

1. Finisseuse, destinée en particulier à être utilisée lors de l'installation de revêtements de sport en matière synthétique et/ou de couches support partiellement élastiques, comprenant un châssis avec au moins un équipement d'avance périphérique et au moins une roue de roulement en prise avec l'équipement d'avance, dans laquelle la roue de roulement (21, 21') est en prise par force avec l'équipement d'avance, **caractérisée en ce que** la roue de roulement (21, 21') dispose d'un corps de roue de roulement (41), au niveau de la périphérie duquel un ou plusieurs bourrelets (29) de type boudin de roue sont agencés et le corps de roue de roulement (41) présente une surface de roulement (43), dans laquelle une rainure périphérique (28) est incisée.

2. Finisseuse selon la revendication 1, **caractérisée en ce que** les bourrelets (29) de type boudin de roue sont agencés respectivement des deux côtés à l'extérieur à côté de la surface de roulement (43) et la surface de roulement (43) est formée par la rainure périphérique (28).

3. Finisseuse selon une ou plusieurs des revendications précédentes, **caractérisée en ce qu'**une roue d'entraînement, en particulier un pignon (16), est prévue, qui est en prise par correspondance de forme avec l'équipement d'avance et/ou la roue d'entraînement présente une surface de roulement et la roue d'entraînement et/ou la surface de roulement présente un revêtement augmentant le frottement et/ou traitement de surface.

4. Finisseuse selon une ou plusieurs des revendications précédentes, **caractérisée en ce que** la roue de roulement (21, 21') présente la surface de roulement (43) et la roue de roulement (21, 21') et/ou surface de roulement (43) présente un revêtement augmentant le frottement et/ou un traitement de surface.

5. Finisseuse selon une ou plusieurs des revendications 3 ou 4, **caractérisée en ce que** l'équipement d'avance présente au niveau de sa surface tournée vers la roue d'entraînement au moins un guide pour la prise avec la roue d'entraînement et la roue d'entraînement présente des évidements réalisés de manière adaptée pour la prise avec le guide et/ou la roue d'entraînement présente au niveau de sa surface tournée vers l'équipement d'avance au moins une saillie pour la prise avec l'équipement d'avance et au niveau de l'équipement d'avance, des évidements réalisés en particulier de manière adaptée pour la prise avec la saillie sont prévus.

6. Finisseuse selon la revendication 5, **caractérisée en ce que** la roue d'entraînement est réalisée sous forme de pignon (16) ou de barbotin.

7. Finisseuse selon la revendication 5 à 6, **caractérisée en ce que** le guide ou la saillie est réalisé sous forme de baguette continue, s'étendant dans le sens périphérique ou sous forme de nez respectivement blocs agencés dans le sens périphérique.

8. Finisseuse selon une ou plusieurs des revendications 5 à 7, **caractérisée en ce que** la roue de roulement (21, 21') présente au niveau de la périphérie et/ou dans la surface de roulement (43) la rainure (28) pour la réception du guide, dans laquelle le guide est en prise par force au moins avec les surfaces latérales de la rainure (28).

9. Finisseuse selon une ou plusieurs des revendications précédentes, **caractérisée en ce que** la roue de roulement (21, 21'), la surface de roulement (43) et/ou la rainure (28) est/sont recouvertes en particulier complètement par l'équipement d'avance et/ou la roue de roulement (21, 21') et/ou la roue d'entraînement présente une suspension.

10. Finisseuse selon une ou plusieurs des revendications précédentes, **caractérisée en ce qu'**un dispositif de tension pour la régulation manuelle et/ou automatique de la tension de l'équipement d'avance est prévu.

11. Finisseuse selon la revendication 10, **caractérisée en ce que** le dispositif de tension est agencé au niveau de la finisseuse (10) et/ou dans la zone de la roue de roulement (21, 21') et/ou de la roue d'entraînement.

12. Finisseuse selon une ou plusieurs des revendications précédentes, **caractérisée en ce que** la roue de roulement (21, 21') et/ou la roue d'entraînement est réalisée sous forme de disque, de rouleau ou de cylindre.

13. Finisseuse selon une ou plusieurs des revendications précédentes, **caractérisée en ce que** deux ou plus de roues de roulement (21, 21') et/ou roues d'entraînement agencées indirectement l'une à côté de l'autre sont prévues.

14. Finisseuse selon une ou plusieurs des revendications précédentes, **caractérisée en ce que** l'équipement d'avance est réalisé sous forme de chaîne périphérique, de courroie périphérique (13) ou de tapis roulant à maillons ou de courroie sans fin et/ou la chaîne est réalisée sous forme de chenille ou de chaîne à maillons.

15. Finisseuse selon une ou plusieurs des revendications 3 à 14, **caractérisée en ce que** la distance entre la roue de roulement (21, 21') et la roue d'entraînement est réglable de façon variable, dans laquelle le réglage de distance entre la roue de roulement (21, 21') et la roue d'entraînement se fait manuellement ou automatiquement.
